## Europäisches Patentamt
## European Patent Office
## Office européen des brevets

(19)

(11) Veröffentlichungsnummer: **0 133 919**
**A2**

(12) # EUROPÄISCHE PATENTANMELDUNG

(21) Anmeldenummer: **84107755.5**

(22) Anmeldetag: **04.07.84**

(51) Int. Cl.⁴: **G 12 B 9/10**

(30) Priorität: **09.07.83 DE 3324849**

(43) Veröffentlichungstag der Anmeldung: **13.03.85**
**Patentblatt 85/11**

(84) Benannte Vertragsstaaten: **AT BE CH FR GB IT LI LU NL SE**

(71) Anmelder: **Bollmann, Armin Albert, Rosenstrasse 10, D-6605 Friedrichsthal/Saar (DE)**

(72) Erfinder: **Bollmann, Armin Albert, Rosenstrasse 10, D-6605 Friedrichsthal/Saar (DE)**

(74) Vertreter: **Boecker, Carl Otto, Dipl.-Ing., Dr. Ehrhardt-Strasse 31, D-6670 St. Ingbert (Saar) (DE)**

(54) Vorrichtung zum Haltern von Geräten an einer Wand, und Verfahren zu deren Herstellung.

(57) Montagewand zum Haltern von Meß-, Prüf- oder medizinischen Behandlungsgeräten an einer Wand, insbesondere für Kliniken, Sanitätsräume oder dergleichen, bestehend aus schachbrettartig angeordneten glatten Platten aus magnetisierbarem Werkstoff für leichte, mit einem Magnetfuß versehene Geräte, und aus zwischen den Platten verlaufende, sich kreuzende trapezartige Profilschienen für schwere Geräte, die mit der Trapezform angepaßten Gerätefüßen versehen sind.

EP 0 133 919 A2

BOLL I

- 1 -

Vorrichtung zum Haltern von Geräten an einer Wand,
insbesondere für Kliniken, Sanitätsräume oder dgl.,
und Verfahren zu deren Herstellung

Die Erfindung betrifft eine Vorrichtung zum Haltern von Geräten an einer Wand mittels mindestens zweier paralleler Schienen nach dem Oberbegriff des Patentanspruches 1. Derartige Vorrichtungen sind als Hilfsmittel für Laboratorien im weitesten Sinne bekannt, um Meß-, Prüf- oder - im medizinischen Bereich - Behandlungsgeräte verschiedener Größe und Gewichte an der Wand von Räumen zu befestigen, z. B. von Intensivstationen, Sanitätsräumen, Notfallbehandlungsräumen, Dialyse-Räumen, Ambulanzen oder dgl. Bekannte Vorrichtungen dieser Art bestehen aus einer Anzahl von parallel verlaufenden waagerechten Halteschienen, an denen die Geräte mittels angepassten Gerätefüßen festgeklemmt werden. Die Geräte können zwar seitlich leicht verschoben werden, jedoch in ihrer Höhenlage nur durch Umsetzen verändert werden. Dies ist besonders umständlich, wenn es sich um leichte Geräte handelt, wie z. B. Blutdruckmesser, Abfallbeutel, Ablagetischchen, Spritzenkanülenspender oder dgl., die man besonders häufig schnell umsetzen möchte.

Der Erfindung liegt die Aufgabe zugrunde, eine Vorrichtung der bekannten Art dahingehend zu vervollkommnen, daß schwere Geräte wie Überwachungsmonitore, Beatmungsgeräte, Infusionspumpen oder dgl. an jeder beliebigen Stelle der Wand, d. h. in beliebiger Seiten- und Höhenlage befestigt werden können, wogegen leichte Geräte ohne jede Notwendigkeit, irgendwelche Klemmschrauben betätigen zu müssen, ebenfalls an beliebigen Stellen und leicht umsetzbar gehaltert werden können.

Diese Aufgabe wird erfindungsgemäß durch die Merkmale des Patentanspruches 1 gelöst. Ein Feld von sich kreuzenden rinnenförmigen Profilschienen mit trapezartigem Querschnitt ermöglicht es, Gerätefüße mit der Trapezform angepaßten Klemmstücken leicht durch die offenen Schmalseiten der Profilschienen einzuführen und nach Drehung durch Anziehen einer Klemmschraube im Inneren einer waagerechten oder senkrechten Schiene zu verklemmen, und zwar in jeder Orientierung der Seite und der Höhe nach. Unter Umständen genügt als Gerätefuß eine Art Haken, den man an den Kreuzungsstellen der offenen Schmalseiten der Profilschienen leicht einführen kann, da hier das Diagonalmaß größer ist als die Breite der Schienenöffnung. Im Verein mit den glatten Platten aus magnetisierbarem Werkstoff wird durch die Erfindung eine Montagewand geschaffen, an der man leichte Geräte, die mit einem Magnetfuß versehen sind, einfach an beliebigen Stellen "anheften" kann.

Die sich kreuzenden Profilschienen ermöglichen es auch, bewegliche Halterungen für große und besonders schwere Geräte an der Montagewand sicher zu befestigen, wobei die Halterungen die bisher erforderlichen Fahrgestelle ersetzen mit dem Vorteil, daß mehr Fußfreiheit und Platz gewonnen wird, wenn das nicht benötigte schwere Geräte an die Wand geschoben wird.

Im Anwendungsbereich für Kliniken oder dgl. sind die Anforderungen an die Hygiene bekanntlich besonders hoch. Die Erfindung sieht daher vor, daß die trapezartigen Profilschienen mit den glatten magnetisierbaren Platten fugenlos verbunden sind. Wenn man die auf der Raumwand befestigte Montagewand mit einer bis zur Wand reichenden umlaufenden Abdeckleiste versieht, besteht die Möglichkeit, die gesamte Montagewand von der Bedienungsseite her mit einem Desinfektionsmittel einzusprühen. Vom Raum hinter der Montagewand her können dann keine Verunreinigungen nach außen dringen.

Ein besonders einfaches Verfahren zur Herstellung einer fugenlosen Montagewand ist im Patentanspruch 3 angegeben und wird an Hand der Zeichnung näher erläutert.

In der Zeichnung ist ein Ausführungsbeispiel einer Montagewand gemäß der Erfindung dargestellt, und zwar zeigt:

Fig. 1 eine Draufsicht auf eine montierte Montagewand mit einigen montierten Geräten,

Fig. 2 einen Schnitt nach der Linie II-II in Fig.1, in vergrößertem Maßstab,

Fig. 3 eine teilweise Draufsicht auf ein Plattenelement mit angeformten Profilschienenhälften, mit einer Einzelheit im Bereich einer Ecke,

Fig. 4 eine Seitenansicht von Fig. 3, und

Fig. 5 einen Schnitt nach der Linie V-V in Fig. 1 in vergrößertem Maßstab zur Darstellung der Tragkonstruktion.

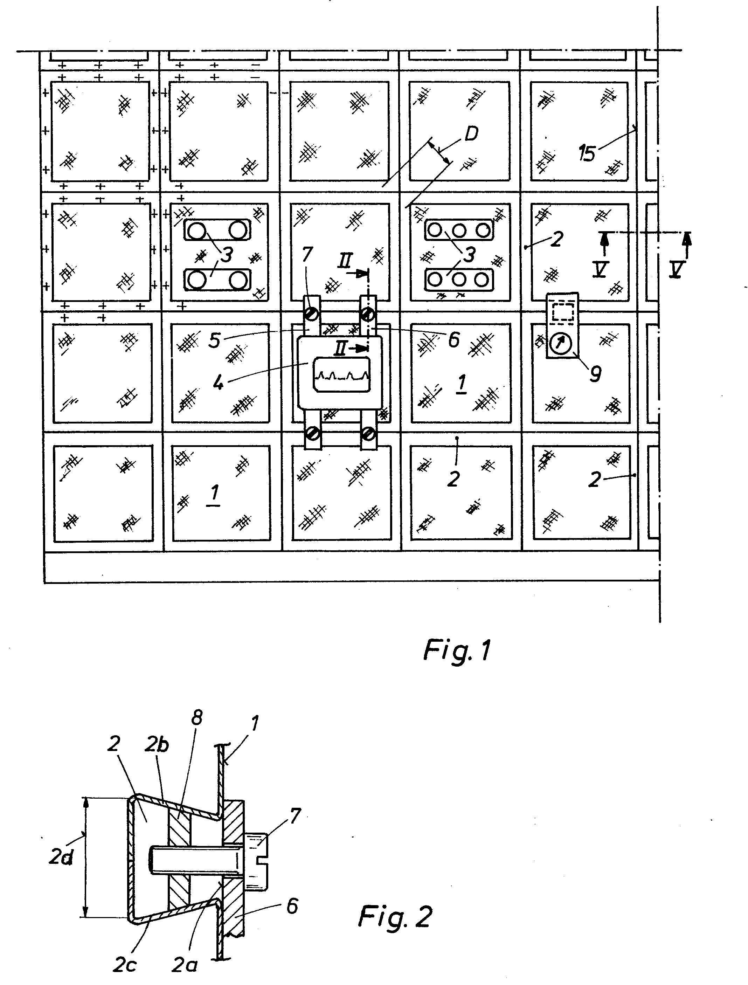

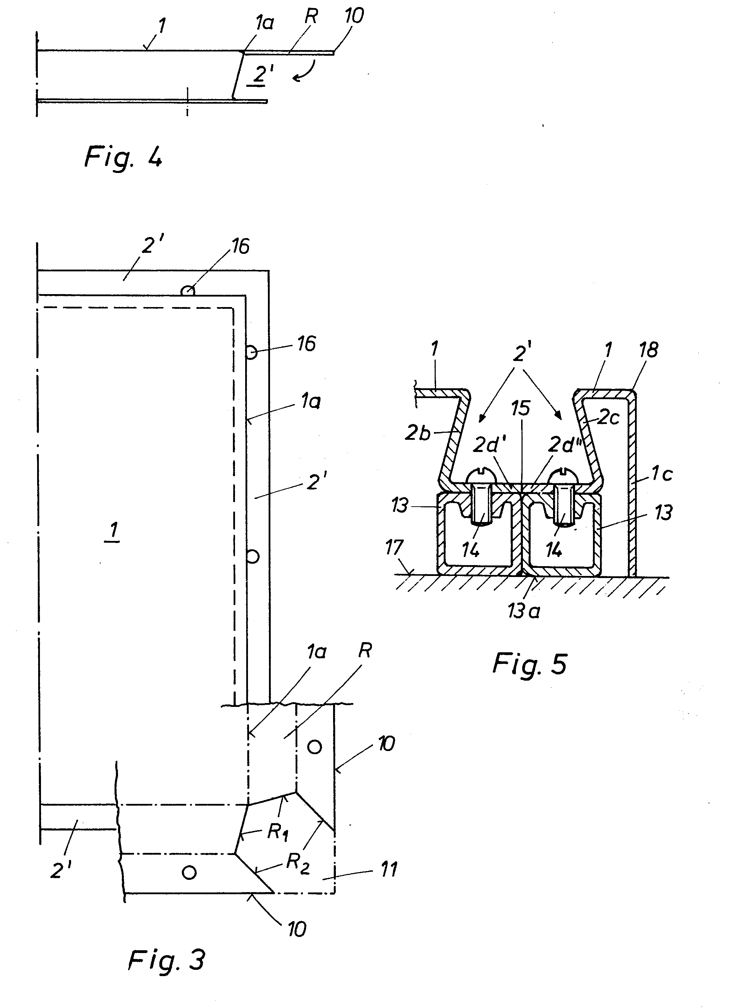

In Fig. 1 erkennt man eine Montagewand mit schachbrettartigen Feldern, bestehend aus quadratischen Platten 1 aus magnetisierbarem Werkstoff, zwischen denen waagerechte und senkrechte, sich kreuzende rinnenförmige Profilschienen 2 verlaufen. Diese Profilschienen 2 haben einen trapezförmigen Querschnitt (Fig. 2 und 5). Die der Bedienungsseite zugewandten Schmalseiten 2a der Trapezform sind offen.

Im Ausführungsbeispiel sind die geneigten Seiten 2b bzw. 2c der Trapezform sowie die Hälften der langen Grundseite 2d der Trapezform mit den benachbarten Platten 1 einheitlich und durch Abkanten hergestellt, wie noch beschrieben wird.

An der Montagewand nach Fig. 1 sind einige Geräte befestigt, wie sie beispielsweise auf der Intensivstation einer Klinik benötigt werden. Einige Behältnisse oder dgl. leichte Geräte 3 sind mittels Magnetfüßen (nicht dargestellt) an verschiedene Platten 1 angeheftet und können leicht umgesetzt werden. Am Beispiel eines Überwachungsmonitors 4 wird die Befestigung von schweren Geräten wie folgt beschrieben: An der Rückwand des Monitors 4 sind zwei senkrechte Flacheisen 5, 6 befestigt, die zwei übereinanderliegende waagerechte Profilschienen 2 übergreifen. Wie aus Fig. 2 hervorgeht, tragen die Flacheisen 5, 6 an ihren Enden Klemmschrauben 7, auf die der Trapezform der Profilschienen 2 angepaßte Klemmstücke 8 aufgeschraubt sind. Die Klemmstücke sind weniger breit als die offenen Schmalseiten 2a der Profilschienen 2, so daß sie in einer bestimmten Drehlage in die trapezartigen Profilschienen 2 eingeführt und nach einer Drehung um 90° in die Klemmlage nach Fig. 2 überführt werden können, in der sie unter Anzug der Schrauben 7 das Flacheisen und damit das Gerät 4 festspannen. Nach Lockern der Schrauben 7 kann das Gerät 4 leicht seitlich verschoben werden. Ebenso könnten auch senkrecht verlaufende Profilschienen 2 für das Festspannen von Geräten herangezogen werden.

Leichtere Geräte wie beispielsweise ein Blutdruckmeßgerät 9 brauchen nicht unbedingt festgeklemmt zu werden; die Trapezform der Profilschienen 2 erlaubt auch ein einfaches Einhängen mittels eines hakenförmigen Gerätefußes. Ein solcher Fuß kann in die Kreuzungsbereiche der Profilschienen 2 leicht eingeführt werden, da hier das Diagonalmaß D größer ist als die Öffnungsbreite der Schmalseiten 2a.

Fig. 3 und 4 zeigen einen seitlichen Bereich eines viereckigen Plattenelementes 1 mit angeformten umlaufenden Profilschienenhälften 2', die im vergrößerten Maßstab auch in Fig. 5 zu sehen sind, und zwar hier durch eine weitere symmetrische Profilschienenhälfte 2' zu einem vollständigen Trapezprofil zusammengesetzt.

Zur Herstellung eines Plattenelementes mit angeformter Profilschinenhälfte 2' wurde folgendes Verfahren angewendet: Ausgegangen wird von einer Platte mit dem Übermaß, das durch die Kanten 10 angegeben ist. An jeder Plattenecke wird ein Sechseck 11 ausgestanzt, wodurch vier Randstreifen R entstehen. Diese Randstreifen werden zunächst in einer ersten Stufe senkrecht zu Oberfläche der Platte 1 um die Biegekante 1a und in einer zweiten Stufe zu der aus Fig. 4 ersichtlichen Winkelform abgekantet, die einer symmetrischen Profilschinenhälfte 2' entspricht. Die durch die sechseckige Ausstanzung 11 entstehenden Schnittlinien $R_1$ und $R_2$ stehen in derartiger Relation zueinander, daß nach dem Abkanten diese Schnittlinien auf Gehrung aneinanderstoßen, wonach sie durch Schweißen fugenlos verbunden werden. Auf diese Weise wird an jeder Platte 1 umlaufend eine symmetrische Schienenhälfte 2' der trapezartigen Profilschienen 2 angeformt. Die so gebildeten Plattenelemente 1, 2' werden, wie Fig. 5 zeigt, derart über die freien Schenkel 2d' und 2d" der Schienenhälften 2' auf einer Tragkonstruktion befestigt, daß die benachbarten Profilschienenhälften 2' sich zu der Trapezform der Profilschienen 2 ergänzen.

Zur Befestigung der Plattenelemente 1, 2' an der Mauerwand 17 dienen nach Fig. 5 im Ausführungsbeispiel zwei Vierkantrohre 13, die miteinander verschraubt sind (nicht dargestellt). Jede der miteinander fluchtenden Grundseitenhälften 2d' und 2d" werden mittels Schrauben 14 mit den Stoßstellen 15 aneinanderliegend an die Vierkantrohre 13 angeschraubt, wobei die flächige Auflage dieser Grundseitenhälften an den Vierkantrohren der fugenlosen Abdichtung der Stoßstelle 15 dient. Selbstverständlich können auch die Auflageflächen an den Vierkantrohren 13 mit einem Dichtmittel gestrichen werden. In Fig. 3 sind die Bohrungen 16 zum Einführen der Schrauben 14 zu sehen. Zur Befestigung der Vierkantrohre 13 an der Wand 17 werden zwischen den Schrauben 14 Durchgangsbohrungen in den Vierkantrohren vorgesehen, die größer sind als die Schraubköpfe von Befestigungsschrauben, über die dann die an der Wand anliegenden Schenkel der Vierkantrohre 13 an der Wand befestigt werden.

Wie die Schnittführung V-V in Fig. 1 zum Ausdruck bringt, ist Fig. 5 ein Querschnitt durch eine randseitige Profilschiene 2. Hierbei wird die äußere Platte 1 um eine Kante 18 derart um 90° umgebogen, daß ein Plattenbereich 1c mit seinem Ende in der Fluchtlinie der mauerseitigen Auflageflächen 13a der Vierkantrohre 13 liegt. Hierdurch ist mit der Abkantung 1c eine seitliche Abdeckleiste geschaffen, die bis zur Mauerwand 17 reicht und dort fugenlos abgedichtet werden kann. Auf diese Weise ist die Tragkonstruktion der Montagewand gemäß der Erfindung gegenüber dem Raum vollständig abgekapselt, so daß die korrespondierenden Plattenelemente 1, 2' hygienisch sauber eingesprüht werden können.

Das dargestellte Ausführungsbeispiel ist auf die Verwendung im klinischen Bereich abgestellt. Es versteht sich, daß die Maßnahmen, den hohen Anforderungen an die Hygiene gerecht zu werden, nicht erforderlich sind, wenn die Montagewandung in technischen Laboratorien oder gar in Werkstätten Verwendung findet. Hier ist es denkbar, daß die Montagewand mit einem Fahrgestell versehen wird, um ortsveränderlich zu sein.

0133919

Patentansprüche

1. Vorrichtung zum Haltern von Geräten an einer Wand mittels mindestens zweier paralleler Schienen, an denen die Geräte lösbar zu befestigen sind, insbesondere zum Haltern von Meß-, Prüf- und medizinischen Behandlungsgeräten in Kliniken, Sanitätsräumen oder dgl., gekennzeichnet durch ein Feld von waagerechten und senkrechten, sich kreuzenden rinnenförmigen Profilschienen (2) mit trapezartigem Querschnitt, deren der Bedienungsseite zugeordneten Schmalseiten (2a) zum Einführen von Gerätfüßen offen sind, und durch zwischen den Profilschienen (2) angeordnete viereckige glatte Platten (1) aus magnetisierbarem Werkstoff.

2. Vorrichtung nach Anspruch 1, dadurch gekennzeichnet, daß die trapezartigen Profilschienen (2) mit den Platten (1) fugenlos verbunden sind.

3. Verfahren zur Herstellung eines Plattenelementes nach Anspruch 2, dadurch gekennzeichnet, daß aus den Ecken einer auf Übermaß (10) zugeschnittenen Platte (1) ein Sechseck (11) ausgestanzt wird, dessen von den Eckpunkten (1a) des Fertigmaßes ausgehenden Schnittlinien ($R_1$, $R_2$) nach einem zweistufigen Abkanten der zwischen den Ausstanzungen verbleibenden Randstreifen (R) auf Gehrung aneinanderstoßen und durch Schweißen fugenlos verbunden werden, so daß an jeder Platte umlaufend eine symmetrische Profilschienenhälfte (2') der trapezartigen Profilschienen (2) angeformt ist.

Fig. 1

Fig. 2

2/2   0133919

Fig. 4

Fig. 3

Fig. 5